# EUROPÄISCHE PATENTSCHRIFT

(11) **EP 1 877 456 B1**
(45) Veröffentlichungstag und Bekanntmachung des Hinweises auf die Patenterteilung: **03.03.2010**
(21) Anmeldenummer: 06742518.1
(22) Anmeldetag: 16.03.2006
(51) Int. Cl.: C08F 212/00, C08F 2/44, C08F 2/16

(54) **VERFAHREN ZUR HERSTELLUNG VON PERLPOYMERISATEN MIT EINER MITTLEREN TEILCHENGRÖSSE IM BEREICH VON 1 µM BIS 40 µM SOWIE PERLPOLYMERISAT AUFWEISENDE FORMMASSEN UND FORMKÖRPER**
METHOD FOR PRODUCTION OF BEAD POLYMERS WITH AN AVERAGE PARTICLE SIZE IN THE RANGE OF 1 µM TO 40 µM AND MOULDED MASSES AND MOULDED BODIES COMPRISING BEAD POLYMERS
PROCEDE POUR PRODUIRE DES POLYMERES EN PERLES DONT LA GRANULOMETRIE MOYENNE VA DE 1 µM A 40 µM, MATIERES DE MOULAGE ET ELEMENTS MOULES COMPORTANT DES POLYMERES EN PERLES

(30) Priorität: 04.05.2005 DE 102005021335
(43) Veröffentlichungstag der Anmeldung: 16.01.2008
(73) Patentinhaber: Evonik Röhm GmbH, 64293 Darmstadt (DE)
(72) Erfinder: SCHWARZ-BARAC, Sabine, 69560 Riedstadt (DE); SCHULTES, Klaus, 65193 Wiesbaden (DE); SCHNABEL, Michael, 64584 Biebesheim (DE); NAU, Stefan, 64572 Büttelborn (DE); GOLCHERT, Ursula, 64807 Dieburg (DE)
(86) Internationale Anmeldenummer: PCT/EP2006/002412
(87) Internationale Veröffentlichungsnummer: WO 2006/117041

(56) Entgegenhaltungen:
- EP-A- 0 443 609
- EP-A- 0 570 782
- EP-A- 0 744 667
- EP-A- 1 219 641
- WO-A-2005/047391
- DE-A1- 10 065 501
- US-A- 4 734 452

## Beschreibung

Die vorliegende Erfindung betrifft Verfahren zur Herstellung von Perlpolymerisaten mit einer mittleren Teilchengröße im Bereich von 1 µm bis 40 µm, bei dem man eine polymerisierbare Zusammensetzung in wässriger Phase dispergiert und polymerisiert. Des weiteren sind Formmassen und Formkörper Gegenstand der vorliegenden Erfindung, die die erfindungsgemäß hergestellten Perlpolymerisate aufweisen.

Für verschiedene Anwendungen werden Perlpolymerisate benötigt, deren Teilchendurchmesser in der Größenordnung zwischen 1 µm und 40 µm mit einer relativ engen Teilchengrößenverteilung liegen. Diese Perlen können u.a. als Zusätze für PMMA-Formmassen verwendet werden.

Insbesondere die lichtstreuenden Formmassen sind als Anwendungsfeld anzusehen. Hier werden Standardformmassen mit sogenannten Streuperlen, welche vernetzt sind und einen anderen Brechungsindex als die Matrix besitzen, abgemischt. Zur Zeit werden in diesen Formmassen Streuteilchen auf PMMA-Basis mit einer Teilchengröße von weit über 40 µm verwendet. Der Vorteil dieser Streuteilchen liegt in der hohen Vorwärtsstreuung der Formkörper nach der Einarbeitung der Streuteilchen in die Formmassen. Hierdurch wird bei einer hohen Streuung eine im Vergleich zu klassischen Trübungsmitteln wie z.B. BaSO₄ oder TiO₂ wesentlich höhere Lichtausbeute erzielt, da der Verlust durch Rückwärtsstreuung geringer ist. Diese bevorzugte Vorwärtsstreuung kann durch Messung der Transmission in der Kombination mit dem Energiehalbwertswinkel oder Intensitätshalbwertswinkel von Formkörpern, die Streuperlen enthalten, bestimmt werden.

Je kleiner die Teilchengröße der Streuperlen ist, desto höher ist der Streueffekt bei gleichem Gewichtsanteil in der Formmasse. Durch Verwendung kleinerer Perlen kann daher deren Menge verringert werden. Dies spart Kosten und schont die Ressourcen. Des weiteren zeigen die mit den kleineren Perlpolymerisaten ausgestatteten Formmassen hervorragende mechanische Eigenschaften, da die verminderte Menge an Streuperlen diese Eigenschaften weniger stark beeinflusst. Werden Streuperlen mit einem Durchmesser kleiner als 5 µm eingesetzt, nimmt der Gelbeindruck der so hergestellten Formmassen deutlich zu.

Darüber hinaus können die oben beschriebenen Perlen auch für mattiert ausgestattete Formmassen und Polyalkyl(meth)acrylat (PAMA)-Plastisole verwendet werden. Diese Anwendungsgebiete stehen jedoch bei der vorliegenden Erfindung nicht im Vordergrund.

Polymerteilchen in der Größenordnung zwischen 1 µm und 10 µm lassen sich über eine Fällungspolymerisation, bei der große Mengen an organischen Lösungsmitteln eingesetzt werden, gut realisieren. Allerdings sind die verwendeten Lösungsmittel sicherheitstechnisch und abfalltechnisch nicht einfach zu handhaben. Auch die Aufarbeitung bereitet Probleme. Daher sind so erhaltene Perlen teuer und werden in den oben dargelegten Anwendungsgebieten aus Kostengründen nicht eingesetzt.

Kostengünstiger lassen sich Polymerperlen durch konventionelle Suspensionspolymerisation gewinnen. Allerdings sind die so erhaltenen Teilchen im allgemeinen größer als 40 µm und zeigen eine breite Verteilung.

Beispielsweise ist aus der europäischen Patentanmeldung EP 0 443 609 A2 ein Suspensionsverfahren zur Herstellung von Perlpolymerisaten bekannt, bei dem man zwei getrennt zugeführte Phasen (Monomere und kontinuierliche Phase) in einer Mischzelle mit hoher Scherenergie vereinigt und danach die Monomere in einem üblichen Reaktionskessel polymerisiert. Es werden verschiedene Hilfsstoffe zur Stabilisierung der Dispersion genannt. Hierzu gehören unter anderem anorganische Stoffe, wie Calciumphosphat, und organische Verbindungen, wie Cellulosederivate oder Polyvinylalkohol. Die Verwendung von Aluminiumverbindungen wird in der EP 0 443 609 A2 nicht beschrieben.

Als Monomere werden in der EP 0 443 609 A2 u. a. Styrol und (Meth)acrylate eingesetzt. Die Beispiele zeigen die Polymerisation von Monomermischungen, die 80 Gew.-% Styrol und 20 Gew.-% Butylacrylat umfassen. Die dabei resultierenden Polymerpartikel wiesen Teilchengrößen im Bereich von 5 µm bis 10 µm auf. Die Verwendung eines Vernetzers wird in der EP 0 443 609 A2 nicht erwähnt.

Die Polymerpartikel können gemäß der EP 0 443 609 A2 insbesondere in der Pulverherstellungsindustrie eingesetzt werden. Für lichtstreuende Formmassen sind sie jedoch schon deshalb nicht geeignet, weil sich die unvernetzten Polymerpartikel in der herzustellenden Formmasse auflösen würden und damit als Lichtstreupartikel unwirksam wären.

Die Druckschrift DE 100 65 501 A1 offenbart ein Verfahren zur Herstellung von Perlpolymerisaten mit einer mittleren Teilchengröße im Bereich von 1 µm bis 40 µm, bei dem man eine polymerisierbare Zusammensetzung, die mindestens 50 Gew. % (Meth)acrylate aufweist, in wässriger Phase dispergiert und polymerisiert. Die mit einer Aluminiumverbindung stabilisierte Dispersion wird bei einer Schergeschwindigkeit ≥ 10³ s⁻¹ hergestellt.

Die resultierenden Perlpolymerisate werden u. a. zur Herstellung von Formkörpern mit matter Oberfläche eingesetzt, wobei die in den Beispielen gezeigten Formkörper eine Transmission gemäß DIN 5036 im Bereich von 76,3 bis 91,1, einen Gelbwert gemäß DIN 6167 im Bereich von 2,9 bis 9,4 und einen Energiehalbwertswinkel im Bereich von 18,5 bis 22,5 aufweisen. Für viele Anwendungen ist jedoch eine höhere Streuwirkung wünschenswert.

In Anbetracht des hierin angegebenen und diskutierten Standes der Technik war es daher Aufgabe der vorliegenden Erfindung, stärker lichtstreuende Formkörper bereitzustellen, welche gleichzeitig eine möglichst hohe Transparenz und einen möglichst niedrigen Gelbwert aufweisen. Dabei sollte die Verbesserung der Streuwirkung auf möglichst kostengünstige Art und Weise erzielt werden.

Diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, werden durch Formkörper gelöst, die ausgehend von Perlpolymerisaten erhältlich sind, die durch das Verfahren gemäß Anspruch 1 erhältlich sind. Dementsprechend stellt die vorliegende Erfindung das Verfahren zur Herstellung der Perlpolymerisate, die Perlpolymerisate, die die Perlpolymerisate umfassenden Formmassen und die aus den Formmassen erhältlichen Formkörper unter Schutz. Besonders zweckmäßige Abwandlungen des Verfahrens, der Perlpolymerisate, der Formmassen und der Formkörper werden in den jeweils abhängigen Unteransprüchen beschrieben.

Dadurch, dass man eine polymerisierbare Zusammensetzung mit der in Anspruch 1 angegebenen Zusammensetzung in wässriger Phase dispergiert und polymerisiert, wobei man die mit einer Aluminiumverbindung stabilisierte Dispersion bei einer Schergeschwindigkeit ≥ 10³ s⁻¹ herstellt, gelingt es auf überraschende Art und Weise, ein Verfahren zur Herstellung von hochwertigen Perlpolymerisaten mit einer mittleren Teilchengröße im Bereich von 1 µm bis 40 µm zur Verfügung zu stellen, ohne dass man ein organisches Lösungsmittel in großen Mengen verwendet, das nach der Polymerisation abgetrennt werden muss.

Durch die erfindungsgemäßen Maßnahmen werden u. a. insbesondere folgende Vorteile erzielt:
⇒ Das erfindungsgemäße Verfahren ermöglicht eine Filtration der erhaltenen Perlpolymere.
⇒ Das Polymerisationsverfahren der vorliegenden Erfindung kann mit kommerziell erhältlichen Anlagen durchgeführt werden.
⇒ Die Perlpolymerisate können erfindungsgemäß ohne größeres Sicherheitsrisiko erhalten werden, da die Verwendung von organischen Lösungsmitteln nicht oder nur in minimalen Mengen erfolgt. Hierdurch kann insbesondere die Freisetzung von umweltschädlichen Stoffen oder deren Handhabung vermieden werden.
⇒ Die Perlpolymerisate sind äußerst kostengünstig.
⇒ Erfindungsgemäß hergestellte Perlpolymerisate zeigen in Formmassen eingearbeitet und zu Formkörpern geformt eine sehr hohe Streuwirkung. Weiterhin zeichnen sie sich durch einen geringen Gelbwert, eine hohe Transmission und einen großen Intensitätshalbwertswinkel aus.

Die im Rahmen der vorliegenden Erfindung herzustellenden Perlpolymerisate weisen eine mittlere Teilchengröße im Bereich von 1 µm bis 40 µm, vorzugsweise im Bereich von 5 µm bis 35 µm auf. Die Teilchengröße bezieht sich auf den Partikeldurchmesser. Dieser Wert kann beispielsweise durch Laserextinktionsverfahren bestimmt werden. Hierzu kann ein CIS-Teilchen-Analysator der Fa. L.O.T. GmbH verwendet werden, wobei die Meßmethode zur Bestimmung der Teilchengröße im Benutzerhandbuch enthalten ist. Diese Methode ist bevorzugt. Darüber hinaus kann die Teilchengröße durch Messen und Auszählen der Teilchen auf entsprechenden Rasterelektronenmikroskop-Aufnahmen ermittelt werden.

Besondere Ausführungsformen der erfindungsgemäß hergestellten Perlpolymerisate zeigen eine enge Größenverteilung. Besonders bevorzugt ist die Standardabweichung vom gemittelten Partikeldurchmesser ≤ 30 µm ganz besonders bevorzugt ≤ 20 µm und insbesondere ≤ 10 µm.

In besonderen Ausgestaltungen des erfindungsgemäßen Verfahrens werden sphärische oder kugelförmige Perlpolymerisate hergestellt, die nicht oder nur in geringem Maß koagulieren, aggregieren oder zusammenlagern.

Die Herstellung der Perlpolymerisate erfolgt erfindungsgemäß durch Polymerisation einer Zusammensetzung, die, jeweils bezogen auf ihr Gesamtgewicht,
■ mehr als 50,0 Gew.-%, bevorzugt mehr als 50,0 Gew.-% bis 99,0 Gew.-%, zweckmäßigerweise 60,0 Gew.-% bis 98,5 Gew.-%, ganz besonders bevorzugt 70,0 Gew.-% bis 94,3 Gew.-%, insbesondere 80,0 Gew.-% bis 90,0 Gew.-% mindestens einer Verbindung der Formel (I), 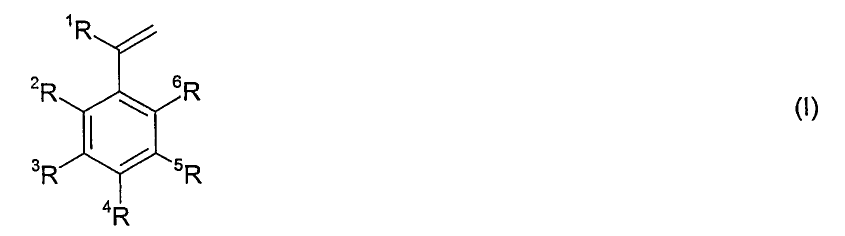
■ 0,1 Gew.-% bis 10,0 Gew.-%, bevorzugt 0,1 Gew.-% bis 5,0 Gew.-%, zweckmäßigerweise 0,5 Gew.-% bis 4,0 Gew.-%, ganz besonders bevorzugt 0,7 Gew.-% bis 3,5 Gew.-%, insbesondere 1,0 Gew.-% bis 3,0 Gew.-% mindestens eines Vernetzers und
■ weniger als 49,9 Gew.-%, bevorzugt 0,9 Gew.-% bis weniger als 49,9 Gew.-%, zweckmäßigerweise 1,0 Gew.-% bis 40,0 Gew.-%, ganz besonders bevorzugt 5,0 Gew.-% bis 30,0 Gew.-%, insbesondere 9,0 Gew.-% bis 19,0 Gew.-% mindestens einer Verbindung der Formel (II) 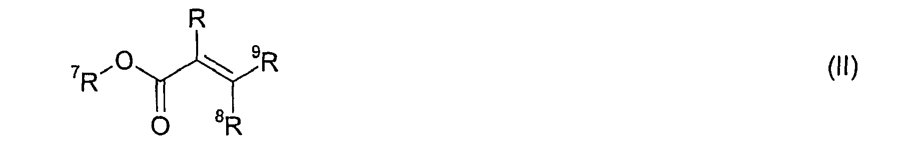
enthält.

Der Rest ¹R ist Wasserstoff oder eine lineare oder verzweigte Alkylgruppe mit 1 bis 6 Kohlenstoffatomen, vorzugsweise Wasserstoff, Methyl oder Ethyl, insbesondere Wasserstoff.

Die Reste ²R bis ⁶R sind jeweils unabhängig voneinander Wasserstoff, eine lineare oder verzweigte Alkylgruppe mit 1 bis 6 Kohlenstoffatomen oder ein Halogen. Besonders bevorzugte Alkylgruppen weisen 1 bis 4 Kohlestoffatome, zweckmäßigerweise 1 oder 2 Kohlestoffatome, insbesondere 1 Kohlestoffatom, auf und umfassen insbesondere Methyl, Ethyl und iso-Propyl. Als Halogene werden Chlor und Brom besonders bevorzugt. Im Rahmen einer ganz besonders vorteilhaften Ausführungsform sind alle Reste ²R bis ⁶R Wasserstoff.

Der Rest R steht für Wasserstoff oder Methyl.

Der Rest ⁷R bedeutet eine lineare oder verzweigte Alkyl- oder eine ggf. alkylierte Cycloalkylgruppe mit 1 bis 40, vorzugsweise 1 bis 24, zweckmäßigerweise 1 bis 12, besonders bevorzugt 1 bis 6, insbesondere 1 bis 4, Kohlenstoffatomen.

Die Reste ⁸R und ⁹R stellen jeweils unabhängig voneinander Wasserstoff oder eine Gruppe der Formel - COOR' dar, worin R' Wasserstoff oder eine Alkylgruppe mit 1 bis 40, vorzugsweise 1 bis 24, zweckmäßigerweise 1 bis 12, besonders bevorzugt 1 bis 6, insbesondere 1 bis 4, Kohlenstoffatomen bedeutet.

Für die Zwecke der vorliegenden Erfindung besonders vorteilhafte Verbindung der Formel (I) umfassen insbesondere Styrol, substituierte Styrole mit einem Alkylsubstituenten in der Seitenkette, wie z. B. a-Methylstyrol und a-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole.

Zu den besonders bevorzugten Verbindung der Formel (II) gehören insbesondere (Meth)acrylate, Fumarate und Maleate, die sich von gesättigten Alkoholen ableiten, wie beispielsweise Methyl(meth)acrylat, Ethyl(meth)acrylat, n-Propyl(meth)acrylat, iso-Propyl(meth)acrylat, n-Butyl(meth)acrylat, tert.-Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propytheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; Cycloalkyl(meth)acrylate, wie Cyclopentyl(meth)acrylat, 2,3,4,5-Tetra-t-butylcyclohexyl(meth)acrylat, Cyclohexyl(meth)acrylat, Bornyl(meth)acrylat; sowie die entsprechenden Fumarate und Maleate.

Die Esterverbindungen mit langkettigem Alkoholrest, insbesondere die Verbindungen Alkoholresten mit 6 und mehr Kohlenstoffatomen, lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911, Oxo Alcohol® 7900, Oxo Alcohol® 1100, Alfol® 610, Alfol® 810, Lial® 125 und Nafol®-Typen (Sasol Olefins & Surfactants GmbH); Alphanol® 79 (ICI); Epal® 610 und Epal® 810 (Ethyl Corporation); Linevol® 79, Linevol® 911 und Neodol® 25E (Shell AG); Dehydad®-, Hydrenol®- und Lorol®-Typen (Cognis); Acropol® 35 und Exxal® 10 (Exxon Chemicals GmbH); Kalcol 2465 (Kao Chemicals).

Von den Verbindungen der Formel (II) sind die (Meth)acrylate gegenüber den Maleaten und Fumaraten besonders bevorzugt, d.h. R⁸ und R⁹ stellen in besonders bevorzugten Ausführungsformen Wasserstoff dar. Im allgemeinen sind die Methacrylaten den Acrylaten bevorzugt.

Der Ausdruck (Meth)acrylat umfasst im Rahmen der vorliegenden Erfindung Methacrylate und Acrylate sowie Mischungen aus beiden.

Die Art des Vernetzers unterliegt erfindungsgemäß keinen besonderen Beschränkungen. Es können vielmehr alle an sich für Vernetzung bei der radikalischen Polymerisation bekannten Verbindungen eingesetzt werden, die mit den Verbindungen der Formel (I) und (II) copolymerisiert werden können. Hierzu gehören insbesondere
(a) Difunktionelle (Meth)acrylate, vorzugsweise
   Verbindungen der allgemeinen Formel: 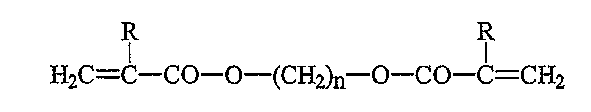 worin R Wasserstoff oder Methyl ist und n eine positive ganze Zahl größer gleich 2, vorzugsweise zwischen 3 und 20 bezeichnet, insbesondere Di(meth)acrylate des Propandiols, Butandiols, Hexandiols, Octandiols, Nonandiols, Decandiols und des Eicosandiols;
   Verbindungen der allgemeinen Formel: 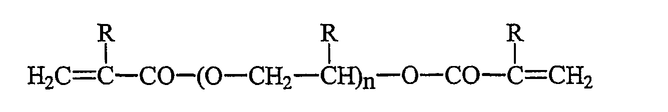 worin R Wasserstoff oder Methyl ist und n eine positive ganze Zahl zwischen 1 und 14 bedeutet, insbesondere Di(meth)acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols.
   Glycerindi(meth)acrylat, 2,2'- Bis[p-(γ-methacry)oxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2- hydroxypropoxy)butan.
(b) Tri- oder polyfunktionelle (Meth)acrylate, insbesondere Trimethylolpropantri(meth)acrylate und Pentaerythritoltetra(meth)acrylat.
(c) Pfropfvernetzer mit mindestens zwei unterschiedlich reaktiven C-C-Doppelbindungen, insbesondere Allylmethacrylat und Allylacrylat;
(d) aromatische Vernetzer, insbesondere 1,2-Divinylbenzol, 1,3-Divinylbenzol und 1,4-Divinylbenzol.

Für die Zwecke der vorliegenden Erfindung haben sich insbesondere die folgenden Verbindungen besonders bewährt:
(Meth)acrylate, die sich von ungesättigten Alkoholen ableiten, wie z. B. Oleyl(meth)acrylat, Allyl(meth)acrylat, Vinyl(meth)acrylat, 2,4,5-Tri-t-butyl-3-Vinylcyclohexyl(meth)acrylat, 3-Vinylcyclohexyl(meth)acrylat;
Methacrylate von ungesättigten Etheralkoholen, wie Vinyloxyethoxyethylmethacrylat, 1-Methyl-(2-vinyloxy)ethylmethacrylat, Allyloxymethylmethacrylat;
mehrwertige (Meth)acrylate, wie Trimethyloylpropantri(meth)acrylat, Glycoldi(meth)acrylat, Bis((meth)acryloyloxyethyl)sulfid; und Diene, wie beispielsweise Divinylbenzol.

Ganz besonders bevorzugt wird Glycoldi(meth)acrylat eingesetzt.

Bevorzugte Mischungen zur Herstellung bevorzugter Perlpolymerisate können des weiteren insbesondere ethylenisch-ungesättigte Monomere, die sich mit den Verbindungen der Formeln (I) und/oder (II) copolymerisieren lassen, umfassen. Der Anteil an Comonomere liegt bevorzugt im Bereich von 0,01 bis 25,0 Gew.-%, vorzugsweise im Bereich von 0,01 bis 10,0 Gew.-%, besonders bevorzugt im Bereich von 0,01 bis 5,0 Gew.-%, insbesondere im Bereich von 0,01 bis 1,0 Gew.-%, bezogen auf das Gesamtgewicht der Monomerzusammensetzung.

Hierbei sind Comonomere zur Polymerisation gemäß der vorliegenden Erfindung besonders geeignet, die der Formel entsprechen: 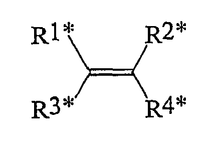 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthiogruppe mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und CO0R^{9*}, worin R^{9*} Wasserstoff, ein Alkalimetall oder eine Alkylgruppe mit 1 bis 40 Kohlenstoffatomen ist, sind, oder R^{3*} und R^{4*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Zu den bevorzugten Comonomeren gehören unter anderem Vinylhalogenide, wie beispielsweise Vinylchlorid, Vinylfluorid, Vinylidenchlorid und
Vinylidenfluorid;
Vinylester, wie Vinylacetat;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinyloxazole und hydrierte Vinyloxazole;
Vinyl- und Isoprenylether;
Maleinsäure und Maleinsäurederivate, wie beispielsweise Maleinsäureanhydrid, Methylmaleinsäureanhydrid, Maleinimid, Methylmaleinimid;
Fumarsäure und Fumarsäurederivate;
Acrylsäure und Methacrylsäure;
Aryl(meth)acrylate, wie Benzylmethacrylat oder Phenylmethacrylat, wobei die Arylreste jeweils unsubstituiert oder bis zu vierfach substituiert sein können;
Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-lodoethylmethacrylat, Chloromethylmethacrylat;
Hydroxyalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat;
carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon, N-(2-Methacryloyloxypentadecyl)-2-pyrrolidinon, N-(3-Methacryloyloxyheptadecyl)-2-pyrrolidinon;
Glycolmethacrylate, wie 1,2-Butandiolmethacrylat, 2-Butoxyethylmethacrylat, 2-Ethoxyethoxymethylmethacrylat, 2-Ethoxyethylmethacrylat;
Methacrylate von Etheralkoholen, wie Tetrahydrofurfurylmethacrylat, Methoxyethoxyethylmethacrylat, 1-Butoxypropylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, 1-Ethoxybutylmethacrylat, Methoxymethylmethacrylat, 1-Ethoxyethylmethacrylat, Ethoxymethylmethacrylat und ethoxylierte (Meth)acrylate, die bevorzugt 1 bis 20, insbesondere 2 bis 8 Ethoxygruppen aufweisen;
Aminoalkyl(meth)acrylate und Aminoalkyl(meth)acrylatamide, wie N-(3-Dimethylaminopropyl)methacrylamid, Dimethylaminopropylmethacrylat, 3-Diethylaminopentylmethacrylat, 3-Dibutylaminohexadecyl(meth)acrylat;
Nitrile der (Meth)acrylsäure und andere stickstoffhaltige Methacrylate, wie N-(Methacryloyloxyethyl)diisobutylketimin,
N-(Methacryloyloxyethyl)dihexadecylketimin, Methacryloylamidoacetonitril, 2-Methacryloyloxyethylmethylcyanamid, Cyanomethylmethacrylat;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;
Oxiranylmethacrylate, wie 2,3-Epoxybutylmethacrylat, 3,4-Epoxybutylmethacrylat, 10,11-Epoxyundecylmethacrylat, 2,3-Epoxycyclohexylmethacrylat, 10,11-Epoxyhexadecylmethacrylat;
Glycidylmethacrylat.

Diese Monomere können einzeln oder als Mischung eingesetzt werden.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 10,0 Gew.-%, vorzugsweise von 0,5 bis 3,0 Gew.-%, bezogen auf das Gesamtgewicht der Monomeren, eingesetzt.

Das Verhältnis Wasser zu Monomer liegt üblicherweise im Bereich von 0,4:1 bis 20:1, bevorzugt von 2:1 bis 8:1, bezogen auf das Gewicht der Komponenten.

Zur Stabilisierung der Dispersion ist die Verwendung von Aluminiumverbindungen, die in Wasser schwer löslich sind, notwendig. Hierzu gehören insbesondere Aluminiumoxid Al₂O₃ und Aluminiumhydroxid Al(OH)₃, wobei Al(OH)₃ bevorzugt ist. Von besonderem Interesse ist Aluminiumhydroxid, das durch Fällung hergestellt wird, wobei diese Fällung möglichst kurz vor Bildung der Dispersion erfolgen sollte. In besonderen Ausführungsformen des erfindungsgemäßen Verfahrens erfolgt die Fällung innerhalb von 2 Stunden, vorzugsweise innerhalb von 1 Stunde und ganz besonders bevorzugt innerhalb von 30 Minuten vor Bildung der Dispersion.

Beispielsweise kann Al₂(SO₄)₃ in Wasser gelöst werden. Diese Lösung kann anschließend mit einer Natriumcarbonat-Lösung versetzt werden bis der pH-Wert im Bereich von 5 bis 5,5 liegt. Durch diese Vorgehensweise wird eine kolloidale Verteilung der Aluminiumverbindung im Wasser erhalten, die besonders bevorzugt ist.

Die Aluminiumverbindung wird vorzugsweise in einer Menge von 0,5 bis 200,0 Gew.-%, besonders bevorzugt 3,0 bis 100,0 Gew.-% und ganz besonders bevorzugt 4,0 bis 20,0 Gew.-%, bezogen auf das Gesamtgewicht der verwendeten Monomere, eingesetzt. Bei Einsatz geringerer Mengen besteht die Gefahr, dass nur eine instabile Dispersion erhalten wird und eine Phasentrennung, zumindest aber die Bildung von größeren Aggregaten eintritt. Werden größere Mengen verwendet, so besteht die Gefahr, dass eine einheitliche Dispersion nicht erzielt werden kann.

Von besonderem Interesse sind auch Verfahren, in denen neben der Aluminiumverbindung weitere Hilfsmittel zur Stabilisierung eingesetzt werden. Hierzu gehören insbesondere oberflächenaktive Stoffe, wie beispielsweise anionische, kationische und neutrale Emulgatoren.

Anionische Emulgatoren sind z.B. Alkalimetallsalze von höheren Fettsäuren mit 8 bis 30 Kohlenstoffatomen, wie Palmitin-, Stearin- und Ölsäure, Alkalimetallsalze von Sulfonsäuren mit beispielsweise 8 bis 30 Kohlenstoffatomen, insbesondere Natriumsalze von Alkyl- oder Arylalkylsulfonsäuren, Alkalimetallsalze von Halbestern der Phthalsäure, und Alkalimetallsalze von Harzsäuren, wie Abitinsäure.

Kationische Emulgatoren sind unter anderem Salze langkettiger, insbesondere ungesättigter Amine mit 10 bis 20 Kohlenstoffatomen, oder quartäre Ammoniumverbindungen mit längerkettigen Olefin- oder Paraffinresten. Neutrale Emulgatoren sind z.B. ethoxylierte Fettalkohole, ethoxylierte Fettsäuren und ethoxylierte Phenole und Fettsäureester von mehrwertigen Alkoholen wie Pentaerythrit oder Sorbit.

Die zuvor genannten Emulgatoren werden vorzugsweise im Bereich von 0,0 bis 5,0 Gew.-%, besonders bevorzugt von 0,3 bis 3,0 Gew.-%, bezogen auf das Gewicht der Aluminiumverbindung, eingesetzt.

Darüber hinaus können der Mischung vor, während oder nach Bildung der Dispersion die üblichen Zusatzstoffe und Hilfsmittel beigefügt werden. Hierzu gehören insbesondere Stoffe, die den Partikeln bestimmte Eigenschaften verleihen, wie Polymere, Farbstoffe und Pigmente, die gegebenenfalls ferromagnetische Eigenschaften aufweisen. Des weiteren können Komplexbildner, wie EDTA oder Trilon A, und Verbindungen, welche die Bildung von Kesselbelag verhindern, wie Polyethylenglykol, eingesetzt werden.

Im Rahmen der vorliegenden Erfindung erfolgt das Dispergieren bei einer Schergeschwindigkeit ≥ 10³ s⁻¹. Vorzugsweise liegt die Schergeschwindigkeit im Bereich von 10⁴ s⁻¹ bis 10⁵ s⁻¹. Bei Schergeschwindigkeiten < 10³ s⁻¹ wird die Teilchengröße des entstehenden Perlpolymerisats größer als 40 µm. Die Schergeschwindigkeit kann als Wert definiert werden, den man erhält, indem man den absoluten Wert der Geschwindigkeitsdifferenz von zwei Ebenen durch die Entfernung zwischen den zwei Ebenen dividiert, wobei sich die zu dispergierende Mischung im Raum zwischen den beiden Ebenen, die einen geringen Abstand von bis zu 6 mm aufweisen, befindet.

Die Herstellung der Dispersion kann mit jedem hierfür geeigneten Verfahren erfolgen. Im Allgemeinen werden hierfür Dispergatoren eingesetzt, die dem Fachmann bekannt sind. Hierzu gehören u.a. Dispermat, Fa. VMA-Getzmann, Reichshof; Ultra-Turrax, Fa. Janke und Kunkel, Staufen und Druckhomogenisator, Fa. Gaulin, Lübeck. Des weiteren sind Geräte mit einem Rotor-Stator-System bekannt, etwa Dispax, Fa. Janke und Kunkel, Staufen; Cavitron- Homogenisatoren, Fa. V. Hagen & Funke, Sprochhövel; Homogenisatoren der Fa. Kotthoff, Essen und Homogenisatoren der Fa. Doee Oliver, Grevenbroich. Üblicherweise werden diese Geräte bei Drehzahlen von 1000 bis 25000 min⁻¹, bevorzugt 2000 bis 25000 min⁻¹ betrieben. Des weiteren können die zur Bildung der Dispersion erforderlichen hohen Scherkräfte ebenso durch Einwirkung von Ultraschall, Hindurchpressen der zu dispergieren Mischung unter hohem Druck durch einen engen Spalt oder durch Düsen kleinen Durchmessers sowie mit Hilfe von Kolloidmühlen erzielt werden.

Das Dispergieren der Monomere sowie der weiteren Bestandteile der Reaktionsmischung findet im allgemeinen bei Temperaturen im Bereich von 0 bis 100°C, vorzugsweise im Bereich von 20 bis 60°C statt, ohne hierauf beschränkt zu sein.

Die Dispergationsdauer kann in einem weiten Bereich in Abhängigkeit vom gewünschten Durchmesser der Monomertröpfchen, von der einzustellenden Größenverteilung und von den Mengenverhältnissen der Mischungsbestandteile liegen. Im allgemeinen kann die Dispersion innerhalb weniger Stunden hergestellt werden.

Das Dispergieren erfolgt im allgemeinen vor Beginn der Polymerisation. Allerdings kann, insbesondere zu Beginn der Polymerisation eine hohe Scherkraft auf die Dispersion einwirken, um eine mögliche Bildung von größeren Aggregaten zu vermeiden. Andererseits sollte die Polymerisation bald nach Bildung der Dispersion erfolgen. Überraschend wurde jedoch festgestellt, dass die durch die Aluminiumverbindung stabilisierte Dispersion über einen relativ großen Zeitraum haltbar ist. Diese Eigenschaft erleichtert die Verwendung üblicher Polymerisationsanlagen, da im Gegensatz zu vielen herkömmlichen Verfahren, zu Beginn der Polymerisation keine Einwirkung von Scherkräften erforderlich ist.

Die Polymerisation kann bei Normaldruck, Unter- oder Überdruck durchgeführt werden. Auch die Polymerisationstemperatur ist unkritisch. Je nach verwendetem Initiatorsystem liegt sie im allgemeinen jedoch im Bereich von 0° - 200°C, vorzugsweise 40° - 130°C und besonders bevorzugt 60° - 120°C, ohne dass hierdurch eine Beschränkung erfolgen soll.

Nach Beendigung der Polymerisation kann die Aluminiumverbindung beispielsweise durch Zugabe von Schwefel- oder Salzsäure in eine wasserlösliche Form überführt werden. Das Perlpolymerisat kann durch Filtration unter Druck vom Wasser abgetrennt werden, ohne dass Probleme auftreten. Werden bekannte organische Verbindungen anstatt der erfindungswesentlichen Aluminiumverbindung zur Stabilisierung der Dispersion eingesetzt, ist eine derartige Filtration aufgrund der rheologischen Eigenschaften der Mischung nicht möglich.

Die gemäß dem zuvor beschriebenen Verfahren erhaltenen Perlpolymerisate finden insbesondere Verwendung in Formmassen, die ebenfalls Gegenstand dieser Erfindung sind. Als Matrixpolymere eignen sich alle für diesen Zweck bekannten thermoplastisch verarbeitbaren Polymere. Hierzu gehören unter anderem Polyalkyl(meth)acrylate, wie beispielsweise Polymethylmethacrylat (PMMA), Polyacrylnitrile, Polystyrole, Polyether, Polyester, Polycarbonate, Polyvinylchloride. Hierbei sind Polyalkyl(meth)acrylate bevorzugt. Diese Polymere können einzeln sowie als Mischung eingesetzt werden. Des weiteren können diese Polymere auch in Form von Copolymeren vorliegen.

Die Brechungsindizes vom Matrixpolymer und vom Perlpolymerisat sind zweckmäßigerweise voneinander verschieden und weisen vorzugsweise eine Differenz von mindestens 0,02 auf.

Der Gehalt des Perlpolymerisats, bezogen auf das Gesamtgewicht der Formmasse, beträgt günstigerweise 0,1 Gew.-% bis 20,0 Gew.-%, bevorzugt 1,0 Gew.-% bis 15,0 Gew.-%, zweckmäßigerweise 3,0 Gew.-% bis 10,0 Gew.-%, insbesondere 4,0 bis 8,0 Gew.-%.

Die Formmassen können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Aus den zuvor beschriebenen Formmassen können durch bekannte Verfahren, wie beispielsweise Extrusion, Formkörper mit lichtstreuenden Eigenschaften erhalten werden. Dabei weisen die Formkörper günstigerweise eine Transmission gemäß DIN 5036 größer 40,0 %, bevorzugt größer 45,0 %, insbesondere größer 50,0 %, auf. Der Intensitätshalbwertswinkel (β) der Formkörper liegt vorzugsweise im Bereich von 35,0° bis kleiner 90,0°, bevorzugt im Bereich von 50,0° bis kleiner 90,0°, insbesondere im Bereich von 72,0° bis kleiner 90,0°. Weiterhin zeichnen sich die Formkörper zweckmäßigerweise durch einen Gelbwert gemäß DIN 6167 kleiner 10,0 %, bevorzugt kleiner 9,5 %, insbesondere kleiner 9,0 %, aus.

Besteht kein Brechungsindexunterschied zwischen der Matrix und der Streuperle, so werden Formkörper mit matter Oberfläche erhalten.

Nachfolgend wird die Erfindung durch Beispiele und Vergleichsbeispiele eingehender erläutert, ohne dass die Erfindung auf diese Beispiele beschränkt werden soll.

### Streuperlen A und C-F

Zur Herstellung des Suspensionspolymerisats wurde ein Aluminiumhydroxid-Pickering-Stabilisator verwendet, der durch Fällung aus Aluminiumsulfat und Sodalösung unmittelbar vor Beginn der eigentlichen Polymerisation hergestellt wurde. Hierzu wurden zunächst 16 g Al₂(SO₄)₃, 0,032 g Komplexbildner (Trilon A) und 0,16 g Emulgator (Emulgator K30 erhältlich von der Fa. Bayer AG; Natriumsalz eines C₁₅-Paraffinsulfonats) in 0,8 I destilliertem Wasser gelöst. Anschließend wurde bei einer Temperatur von ca. 40°C eine 1 N Natriumcarbonat-Lösung zu dem in Wasser gelöstem Aluminiumsulfat unter Rühren zugegeben, wobei der pH-Wert anschließend im Bereich von 5 bis 5,5 lag. Durch diese Vorgehensweise wurde eine kolloidale Verteilung des Stabilisators im Wasser erzielt. Um Kesselwandbelag vorzubeugen, wird Polyethylenglykol (Molekulargewicht 5.000-6.000 g/mol) im Anschluss an die Verteilerfällung zugegeben.

Nach der Fällung des Stabilisators wurde die wässrige Phase in ein Becherglas überführt. Hierzu wurden 200 g einer Monomermischung mit der in Tabelle 1 angegebenen Zusammensetzung sowie 4 g Dilaurylperoxyd, 0,4 g tert.-Butylper-2-ethylhexanoat und 1,6 g Ammoniumperoxodisulfat gegeben. Diese Mischung wurde mittels eines Dispergators (Ultra-Turrax S50N-G45MF, Fa. Janke und Kunkel, Staufen) 15 Minuten bei 7.000 U/min dispergiert.

Im Anschluss an die Scherung wurde das Reaktionsgemisch in den Reaktor, welcher auf die entsprechende Reaktionstemperatur von 90 °C vorgeheizt wurde, eingefüllt und bei ca. 90°C (Polymerisationstemperatur) 45 Minuten (Polymerisationsdauer) unter Rühren (600 U/min) polymerisiert. Es folgte eine Nachreaktionsphase von 1 Stunde bei ca. 85°C Innentemperatur. Nach Abkühlen auf 45°C wurde der Stabilisator durch Zusatz von 50%iger Schwefelsäure in wasserlösliches Aluminiumsulfat überführt. Zur Aufarbeitung der Perlen wurde die erhaltene Suspension über ein handelsübliches Filtertuch filtriert und im Wärmeschrank 24 Stunden bei 50°C getrocknet.

Die Größenverteilung wurde durch Laserextinktionsverfahren hinsichtlich ihrer mittleren Größe V₅₀ und der zugehörigen Standardabweichung untersucht. Die Ergebnisse werden in Tabelle 1 zusammengefasst. Die Perlen hatten eine sphärische Form, wobei keine Fasern festgestellt werden konnten. Koagulation trat nicht auf.

### Streuperlen G und H

Die Herstellung erfolgte entsprechend der Polymerisationsvorschrift für die Streuperlen A, C-F, außer dass die in Tabelle 1 angegebenen Monomermischungen verwendet und kein Pickering-Stabilisator zugesetzt wurde.

Die Größenverteilung der so erhaltenen Perlpolymerisate wird ebenfalls in Tabelle 1 angegeben.

### Streuperle B

Die Herstellung erfolgte im wesentlichen entsprechend der Polymerisationsvorschrift für die Streuperlen A, C-F, wobei jedoch jeweils die 200fachen Mengen der Bestandteile eingesetzt wurden. Hierdurch mussten einige technisch bedingte Änderungen vorgenommen werden. Der gefällte Pikeringstabilisator wurde mit Monomeren, Initiator und Zusatzstoffen im Reaktor vorgelegt und anschließend bei einer Temperatur von 40 °C mit Hilfe eines Durchflussdispergators (Dispax-Reaktor, Fa. Janke und Kunkel) dispergiert. Hierzu wurde die Mischung 30 Minuten zyklisch durch den Dispergator geführt, wobei die Dispersion innerhalb des Reaktors mit einem konventionellen Rührer bei 150 U/min gerührt wurde.

Nach 30 Minuten wurde die Dispersion auf 80°C erwärmt. Die Polymerisation und Aufarbeitung erfolgte entsprechend der Polymerisationsvorschrift für die Streuperlen A, C-F.

Die Größenverteilung des so erhaltenen Perlpolymerisats wird ebenfalls in Tabelle 1 angegeben.

**Tabelle 1**

| Streuperle | Methylmethacrylat [Gew.-] | Styrol [Gew.-%] | Glycoldimethacrylat [Gew.-%] | V₅₀ [µm] | σ [µm] |
|---|---|---|---|---|---|
| A | 13,0 | 85,0 | 2,0 | 30 | 25 |
| B | 13,0 | 85,0 | 2,0 | 30 | 45 |
| C | 28,0 | 70,0 | 2,0 | 32 | 24 |
| D | 35,5 | 62,5 | 2,0 | 30 | 25 |
| E | 48,0 | 50,0 | 2,0 | 25 | 26 |
| F | 0,0 | 98,0 | 2,0 | 22 | 24 |
| G | 13,0 | 85,0 | 2,0 | 53 | 42 |
| H | 69,0 | 30,0 | 1,0 | 74 | 77 |

### Lichtstreuende Prüfkörper

Zur weiteren Untersuchung wurde eine PMMA-Standardformmasse (PLEXIGLAS® 7N erhältlich von Röhm GmbH) mit den in Tabelle 2 angegebenen Mengen der Streuperlen A-H modifiziert. Aus diesen Formmassen wurden durch Spritzguss Prüfkörper mit den Maßen 60 mm x 45 mm x 3 mm hergestellt, an denen die Transmission (T) gemäß DIN 5036, der Gelbwert (G) gemäß DIN 6167 und der Intensitätshalbwertswinkel (β) gemessen gemäß DIN 5036 mit einem Messgerät LMT-Goniometer-Meßplatz GO-T-1500 der Fa. LMT, bestimmt wurden.

Die so erhaltenen Daten sind in Tabelle 2 dargestellt.

**Tabelle 2**

| | Streuperle | Gehalt an Streuperle [Gew.-%] | T [%] | G [%] | β [°] |
|---|---|---|---|---|---|
| Beispiel 1 | A | 4 | 57,19 | 8,84 | 71,42 |
| Beispiel 2 | A | 6 | 52,19 | 8,26 | 77,60 |
| Beispiel 3 | A | 9 | 48,31 | 9,48 | 78,15 |
| Beispiel 4 | A | 12 | 44,79 | 11,97 | 80,25 |
| Beispiel 5 | B | 4 | 61,28 | 10,27 | 47,50 |
| Beispiel 6 | B | 6 | 53,32 | 9,62 | 77,25 |
| Beispiel 7 | B | 9 | 48,15 | 11,96 | 79,41 |
| Beispiel 8 | B | 12 | 45,88 | 14,30 | 79,23 |
| Beispiel 9 | C | 3 | 64,06 | 9,86 | 45,02 |
| Beispiel 10 | C | 6 | 52,79 | 8,21 | 78,86 |
| Beispiel 11 | C | 9 | 51,07 | 9,03 | 79,77 |
| Beispiel 12 | C | 12 | 49,19 | 10,81 | 79,37 |
| Beispiel 13 | D | 6 | 63,00 | 8,90 | 54,33 |
| Beispiel 14 | E | 6 | 69,00 | 9,43 | 39,13 |
| Beispiel 15 | F | 2 | 60,85 | 9,73 | 50,53 |
| Beispiel 16 | F | 4 | 50,41 | 8,78 | 77,93 |
| Beispiel 17 | F | 6 | 50,41 | 9,69 | 78,25 |
| Vergleichsbeispiel 1 | G | 6 | 55,81 | 9,68 | 71,32 |
| Vergleichsbeispiel 2 | H | 6 | 92,04 | 1,27 | 10,98 |

Die Prüfergebnisse in Tabelle 2 zeigen, dass die Streuperlen, eincompoundiert in Formmassen und gemäß dem Verfahren der vorliegen Erfindung hergestellt (Beispiele 1 bis 17), das Licht ohne großen Energieverlust sehr gut streuen. Dabei zeigen die Streuperlen mit einem Stryolgehalt von 85 Gew.-% die höchste Streuwirkung. Streuperlen mit einem geringeren oder einem höheren Styrolgehalt erzielen zwar auch einen hohen Intensitätshalbwertswinkel, dieser fällt jedoch mit abnehmender Konzentration der Streuperle in der Formmasse schneller ab.

## Patentansprüche

1. Verfahren zur Herstellung von Perlpolymerisaten mit einer mittleren Teilchengröße im Bereich von 1 µm bis 40 µm, bei dem man eine polymerisierbare Zusammensetzung in wässriger Phase dispergiert und polymerisiert, wobei man die mit einer Aluminiumverbindung stabilisierte Dispersion bei einer Schergeschwindigkeit ≥ 10³ s⁻¹ herstellt, **dadurch gekennzeichnet, dass** man eine polymerisierbare Zusammensetzung einsetzt, die, jeweils bezogen auf ihr Gesamtgewicht,
a) mehr als 50,0 Gew.-% mindestens einer Verbindung der Formel (I), 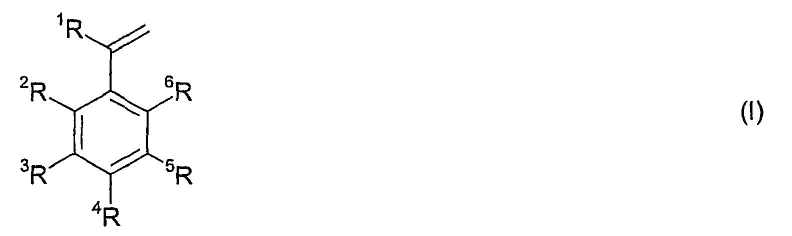 wobei ¹R Wasserstoff oder eine lineare oder verzweigte Alkylgruppe mit 1 bis 6 Kohlenstoffatomen ist und die Reste ²R bis ⁶R jeweils unabhängig voneinander Wasserstoff, eine lineare oder verzweigte Alkylgruppe mit 1 bis 6 Kohlenstoffatomen oder ein Halogen sind,
b) 0,1 Gew.-% bis 10,0 Gew.-% mindestens eines Vernetzers und
c) weniger als 49,9 Gew.-% mindestens einer Verbindung der Formel (II) 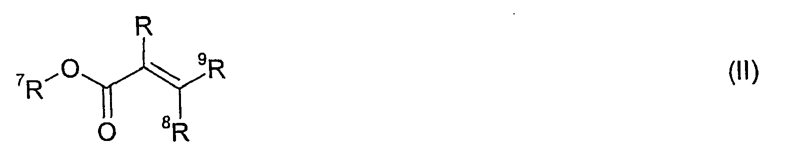
wobei R Wasserstoff oder Methyl darstellt, ⁷R eine lineare oder verzweigte Alkyl- oder eine ggf. alkylierte Cycloalkylgruppe mit 1 bis 40 Kohlenstoffatomen bedeutet und die Reste ⁸R und ⁹R, jeweils unabhängig voneinander, Wasserstoff oder eine Gruppe der Formel - COOR' darstellen, worin R' Wasserstoff oder eine Alkylgruppe mit 1 bis 40 Kohlenstoffatomen bedeutet,
enthält.

2. Verfahren gemäß Anspruch 1, **dadurch gekennzeichnet, dass** man eine polymerisierbare Zusammensetzung einsetzt, die, jeweils bezogen auf ihr Gesamtgewicht,
mehr als 50,0 Gew.-% bis 99,0 Gew.-% mindestens einer Verbindung der Formel (I),
0,1 Gew. bis 5,0 Gew.-% mindestens eines Vernetzers und
0,9 Gew.-% bis weniger als 49,9 Gew.-% mindestens einer Verbindung der Formel (II)
enthält.

3. Verfahren gemäß Anspruch 2, **dadurch gekennzeichnet, dass** man eine polymerisierbare Zusammensetzung einsetzt, die, jeweils bezogen auf ihr Gesamtgewicht,
60,0 Gew.-% bis 98,5 Gew.-% mindestens einer Verbindung der Formel (I), 0,5 Gew. bis 4,0 Gew.-% mindestens eines Vernetzers und
1,0 Gew.-% bis 40,0 Gew.-% mindestens einer Verbindung der Formel (II) enthält.

4. Verfahren gemäß Anspruch 3, **dadurch gekennzeichnet, dass** man eine polymerisierbare Zusammensetzung einsetzt, die, jeweils bezogen auf ihr Gesamtgewicht,
70,0 Gew.-% bis 94,3 Gew.-% mindestens einer Verbindung der Formel (I), 0,7 Gew.-% bis 3,5 Gew.-% mindestens eines Vernetzers und
5,0 Gew.-% bis 30,0 Gew.-% mindestens einer Verbindung der Formel (II) enthält.

5. Verfahren gemäß Anspruch 4, **dadurch gekennzeichnet, dass** man eine polymerisierbare Zusammensetzung einsetzt, die, jeweils bezogen auf ihr Gesamtgewicht,
80,0 Gew.-% bis 90,0 Gew.-% mindestens einer Verbindung der Formel (I), 1,0 Gew.-% bis 3,0 Gew.-% mindestens eines Vernetzers und
9,0 Gew.-% bis 19,0 Gew.-% mindestens einer Verbindung der Formel (II) enthält.

6. Verfahren gemäß einem oder mehreren der vorhergehenden Ansprüche, **dadurch gekennzeichnet, dass** man Al(OH)₃ zur Stabilisierung einsetzt.

7. Verfahren gemäß Anspruch 6, **dadurch gekennzeichnet, dass** man das Al(OH)₃ durch Fällung herstellt.

8. Verfahren gemäß einem oder mehreren der vorhergehenden Ansprüche, **dadurch gekennzeichnet, dass** die Konzentration der Aluminiumverbindung, bezogen auf das Gewicht der polymerisierbaren Zusammensetzung, im Bereich von 0,5 Gew.-% bis 200,0 Gew.-% liegt.

9. Verfahren gemäß Anspruch 8, **dadurch gekennzeichnet, dass** die Konzentration der Aluminiumverbindung, bezogen auf das Gewicht der polymerisierbaren Zusammensetzung, im Bereich von 3,0 Gew.-% bis 100,0 Gew.-% liegt.

10. Verfahren gemäß Anspruch 9, **dadurch gekennzeichnet, dass** die Konzentration der Aluminiumverbindung, bezogen auf das Gewicht der polymerisierbaren Zusammensetzung, im Bereich von 4,0 Gew.-% bis 20,0 Gew.-% liegt.

11. Verfahren gemäß einem oder mehreren der vorhergehenden Ansprüche, **dadurch gekennzeichnet, dass** die Teilchengröße im Bereich von 5 µm bis 35 µm liegt.

12. Verfahren gemäß einem oder mehreren der vorhergehenden Ansprüche, **dadurch gekennzeichnet, dass** man zusätzlich einen Emulgator einsetzt.

13. Verfahren gemäß Anspruch 13, **dadurch gekennzeichnet, dass** die Konzentration des Emulgators, bezogen auf das Gewicht der Aluminiumverbindung, im Bereich von 0,0 Gew.-% bis 5,0 Gew.-% liegt.

14. Verfahren gemäß Anspruch 14, **dadurch gekennzeichnet, dass** die Konzentration des Emulgators, bezogen auf das Gewicht der Aluminiumverbindung, im Bereich von 0,3 Gew.-% bis 3,0 Gew.-% liegt.

15. Verfahren gemäß einem oder mehreren der vorhergehenden Ansprüche, **dadurch gekennzeichnet, dass** man die nach der Polymerisation erhaltene Dispersion filtriert.

16. Perlpolymerisat, hergestellt nach einem Verfahren gemäß einem oder mehreren der vorangehenden Ansprüche.

17. Formmasse, enthaltend mindestens ein Perlpolymerisat gemäß Anspruch 16.

18. Formkörper mit lichtstreuenden Eigenschaften, enthaltend mindestens ein Perlpolymerisat gemäß Anspruch 16.

19. Formkörper gemäß Anspruch 18, **dadurch gekennzeichnet, dass** er eine Transmission gemäß DIN 5036 größer 40,0 % aufweist.

20. Formkörper gemäß Anspruch 18 oder 19, **dadurch gekennzeichnet, dass** er einen Intensitätshalbwertswinkel (β) im Bereich von 35,0° bis kleiner 90,0° aufweist.

21. Formkörper gemäß mindestens einem der Ansprüche 18 bis 20, **dadurch gekennzeichnet, dass** er einen Gelbwert gemäß DIN 6167 kleiner 10,0 % aufweist.

## Claims

1. Process for preparation of bead polymers whose average particle size is in the range from 1 µm to 40 µm, by dispersing and polymerizing a polymerizable composition in an aqueous phase, where the dispersion stabilized by an aluminium compound is prepared at a shear rate ≥ 10³ s⁻¹, **characterized in that** a polymerizable composition is used which, in each case based on its total weight, comprises
a) more than 50.0% by weight of at least one compound of the formula (I), 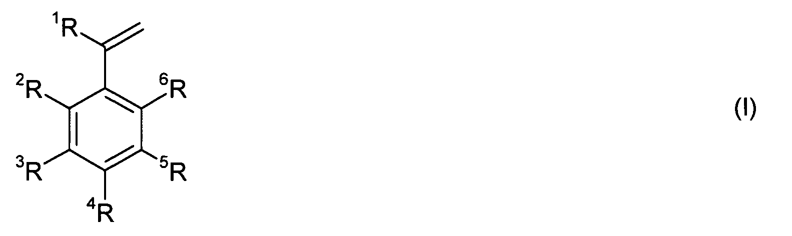 where ¹R is hydrogen or a linear or branched alkyl group having from 1 to 6 carbon atoms and each of the radicals ²R to ⁶R is, independently of the others, hydrogen, a linear or branched alkyl group having from 1 to 6 carbon atoms, or a halogen,
b) from 0.1 % by weight to 10.0% by weight of at least one crosslinking agent and
c) less than 49.9% by weight of at least one compound of the formula (II) 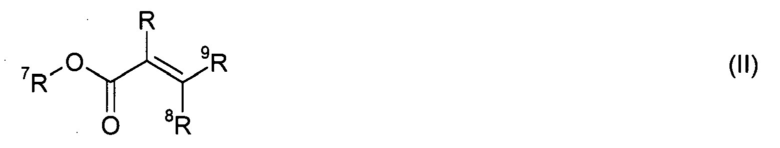
where R is hydrogen or methyl, ⁷R is a linear or branched alkyl group or an optionally alkylated cycloalkyl group having from 1 to 40 carbon atoms and the radicals ⁸R and ⁹R, in each case independently of each other, are hydrogen or a group of the formula -COOR', where R' is hydrogen or an alkyl group having from 1 to 40 carbon atoms.

2. Process according to Claim 1, **characterized in that** a polymerizable composition is used which, in each case based on its total weight, comprises
from more than 50.0% by weight to 99.0% by weight of at least one compound of the formula (I),
from 0.1 % by weight to 5.0% by weight of at least one crosslinking agent and
from 0.9% by weight to less than 49.9% by weight of at least one compound of the formula (II).

3. Process according to Claim 2, **characterized in that** a polymerizable composition is used which, in each case based on its total weight, comprises
from 60.0% by weight to 98.5% by weight of at least one compound of the formula (I),
from 0.5% by weight to 4.0% by weight of at least one crosslinking agent and
from 1.0% by weight to 40.0% by weight of at least one compound of the formula (II).

4. Process according to Claim 3, **characterized in that** a polymerizable composition is used which, in each case based on its total weight, comprises
from 70.0% by weight to 94.3% by weight of at least one compound of the formula (I),
from 0.7% by weight to 3.5% by weight of at least one crosslinking agent and
from 5.0% by weight to 30.0% by weight of at least one compound of the formula (II).

5. Process according to Claim 4, **characterized in that** a polymerizable composition is used which, in each case based on its total weight, comprises
from 80.0% by weight to 90.0% by weight of at least one compound of the formula (I),
from 1.0% by weight to 3.0% by weight of at least one crosslinking agent and
from 9.0% by weight to 19.0% by weight of at least one compound of the formula (II).

6. Process according to one or more of the preceding claims, **characterized in that** Al(OH)₃ is used for stabilization.

7. Process according to Claim 6, **characterized in that** the Al(OH)₃ is prepared via precipitation.

8. Process according to one or more of the preceding claims, **characterized in that** the concentration of the aluminium compound, based on the weight of the polymerizable composition, is in the range from 0.5% by weight to 200.0% by weight.

9. Process according to Claim 8, **characterized in that** the concentration of the aluminium compound, based on the weight of the polymerizable composition, is in the range from 3.0% by weight to 100.0% by weight.

10. Process according to Claim 9, **characterized in that** the concentration of the aluminium compound, based on the weight of the polymerizable composition, is in the range from 4.0% by weight to 20.0% by weight.

11. Process according to one or more of the preceding claims, **characterized in that** the particle size is in the range from 5 µm to 35 µm.

12. Process according to one or more of the preceding claims, **characterized in that** an emulsifier is also used.

13. Process according to Claim 12, **characterized in that** the concentration of the emulsifier, based on the weight of the aluminium compound, is in the range from 0.0% by weight to 5.0% by weight.

14. Process according to Claim 13, **characterized in that** the concentration of the emulsifier, based on the weight of the aluminium compound, is in the range from 0.3% by weight to 3.0% by weight.

15. Process according to one or more of the preceding claims, **characterized in that** the dispersion obtained after the polymerization reaction is filtered.

16. Bead polymer, prepared by a process according to one or more of the preceding claims.

17. Moulding composition, comprising at least one bead polymer according to Claim 16.

18. Moulding with light-scattering properties, comprising at least one bead polymer according to Claim 16.

19. Moulding according to Claim 18, whose transmittance to DIN 5036 is greater than 40.0%.

20. Moulding according to Claim 18 or 19, **characterized in that** its halved-intensity angle (β) is in the range from 35.0° to less than 90.0°.

21. Moulding according to at least one of Claims 18 to 20, **characterized in that** its yellowness index to DIN 6167 is smaller than 10.0%.

## Revendications

1. Procédé de préparation de polymères en perles ayant une granulométrie moyenne comprise dans la plage de 1 µm à 40 µm, dans lequel on disperse et polymérise en phase aqueuse une composition polymérisable ; la dispersion, stabilisée par un composé de l'aluminium, étant stabilisée en présence d'une vitesse de cisaillement ≥ 10³ s⁻¹, **caractérisé en ce qu'**on utilise une composition polymérisable qui contient, dans chaque cas par rapport à son poids total,
a) plus de 50,0 % en poids d'un composé de formule (I) 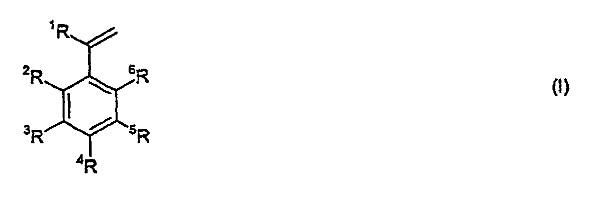 dans laquelle ¹R est un atome d'hydrogène ou un groupe alkyle à chaîne droite ou ramifiée ayant 1 à 6 atomes de carbone, et chacun des radicaux ²R à ⁶R est, indépendamment des autres, un atome d'hydrogène, un groupe alkyle à chaîne droite ou ramifiée ayant 1 à 6 atomes de carbone, ou un halogène,
b) 0,1 % en poids à 10,0 % en poids d'au moins un agent de réticulation, et
c) moins 49,9 % en poids d'au moins un composé de formule (II) 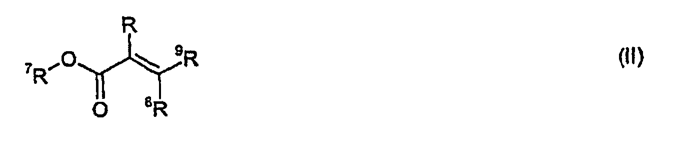
dans laquelle R est un atome d'hydrogène ou le groupe méthyle, ⁷R représente un groupe alkyle à chaîne droite ou ramifiée ou un groupe cycloalkyle éventuellement alkylé ayant 1 à 40 atomes de carbone, et les radicaux ⁸R et ⁹R représentent chacun indépendamment de l'autre un atome d'hydrogène ou un groupe de formule -COOR', R' étant un atome d'hydrogène ou un groupe alkyle ayant 1 à 40 atomes de carbone.

2. Procédé selon la revendication 1, **caractérisé en ce qu'**on utilise une composition polymérisable qui contient, dans chaque cas par rapport à son poids total,
plus de 50,0 % en poids à 99,0 % en poids d'au moins un composé de formule (I),
0,1 % en poids à 5,0 % en poids d'au moins un agent de réticulation, et
0,9 % en poids à moins de 49,9 % en poids d'au moins un composé de formule (II).

3. Procédé selon la revendication 2, **caractérisé en ce qu'**on utilise une composition polymérisable qui contient, dans chaque cas par rapport à son poids total,
60,0 % en poids à 98,5 % en poids d'au moins un composé de formule (I),
0,5 % en poids à 4,0 % en poids d'au moins un agent de réticulation, et
1,0 % en poids à 40,0 % en poids d'au moins un composé de formule (II).

4. Procédé selon la revendication 3, **caractérisé en ce qu'**on utilise une composition polymérisable qui contient, dans chaque cas par rapport à son poids total,
70,0 % en poids à 94,3 % en poids d'au moins un composé de formule (I),
0,7 % en poids à 3,5 % en poids d'au moins un agent de réticulation, et
5,0 % en poids à 30,0 % en poids d'au moins un composé de formule (II).

5. Procédé selon la revendication 4, **caractérisé en ce qu'**on utilise une composition polymérisable qui contient, dans chaque cas par rapport à son poids total,
80,0 % en poids à 90,0 % en poids d'au moins un composé de formule (I),
1,0 % en poids à 3,0 % en poids d'au moins un agent de réticulation, et
9,0 % en poids à 19,0 % en poids d'au moins un composé de formule (II).

6. Procédé selon l'une ou plusieurs des revendications précédentes, **caractérisé en ce qu'**on utilise de l'Al(OH)₃ pour la stabilisation.

7. Procédé selon la revendication 6, **caractérisé en ce qu'**on prépare l'A1 (OH)₃ par précipitation.

8. Procédé selon l'une ou plusieurs des revendications précédentes, **caractérisé en ce que** la concentration du composé de l'aluminium est, par rapport au poids de la composition polymérisable, comprise dans la plage de 0,5 % en poids à 200,0 % en poids.

9. Procédé selon la revendication 8, **caractérisé en ce que** la concentration du composé de l'aluminium est, par rapport au poids de la composition polymérisable, comprise dans la plage de 3,0 % en poids à 100,0 % en poids.

10. Procédé selon la revendication 9, **caractérisé en ce que** la concentration du composé de l'aluminium est, par rapport au poids de la composition polymérisable, comprise dans la plage de 4,0 % en poids à 20,0 % en poids.

11. Procédé selon l'une ou plusieurs des revendications précédentes, **caractérisé en ce que** la granulométrie est comprise dans la plage de 5 µm à 35 µm.

12. Procédé selon l'une ou plusieurs des revendications précédentes, **caractérisé en ce qu'**on utilise en outre un émulsifiant.

13. Procédé selon la revendication 12, **caractérisé en ce que** la concentration de l'émulsifiant est, par rapport au poids du composé de l'aluminium, comprise dans la plage de 0,0 % en poids à 5,0 % en poids.

14. Procédé selon la revendication 13, **caractérisé en ce que** la concentration de l'émulsifiant est, par rapport au poids du composé de l'aluminium, comprise dans la plage de 0,3 % en poids à 3,0 % en poids.

15. Procédé selon l'une ou plusieurs des revendications précédentes, **caractérisé en ce qu'**on filtre la dispersion obtenue après la polymérisation.

16. Polymère en perles, préparé par un procédé selon l'une ou plusieurs des revendications précédentes.

17. Mélange à mouler, contenant au moins un polymère en perles selon la revendication 16.

18. Objet moulé ayant des propriétés de diffusion de la lumière, contenant au moins un polymère en perles selon la revendication 16.

19. Objet moulé selon la revendication 18, **caractérisé en ce qu'**il présente un facteur de transmission selon DIN 5036 supérieur à 40,0 %.

20. Objet moulé selon la revendication 18 ou 19, **caractérisé en ce qu'**il présente un angle à mi-intensité (β) compris dans la plage de 35,0° à moins de 90,0°.

21. Objet moulé selon au moins l'une des revendications 18 à 20, **caractérisé en ce qu'**il présente un indice de jaunissement selon DIN 6167 inférieur à 10,0 %.
